(19) Europäisches Patentamt
European Patent Office
Office européen des brevets

(11) Publication number: 0 186 235 B1

# (12) EUROPEAN PATENT SPECIFICATION

(45) Date of publication of patent specification: 19.10.88

(51) Int. Cl.$^4$: B 01 D 53/34, C 10 K 1/08

(21) Application number: 85202025.4

(22) Date of filing: 05.12.85

## (54) Removal of acid gases from a sour gaseous stream.

(30) Priority: 24.12.84 US 685947
24.12.84 US 685946

(43) Date of publication of application:
02.07.86 Bulletin 86/27

(45) Publication of the grant of the patent:
19.10.88 Bulletin 88/42

(84) Designated Contracting States:
BE DE FR GB IT NL

(56) References cited:
US-A-4 009 251
US-A-4 091 073
US-A-4 189 462
US-A-4 278 646

(73) Proprietor: SHELL INTERNATIONALE RESEARCH MAATSCHAPPIJ B.V.
Carel van Bylandtlaan 30
NL-2596 HR Den Haag (NL)

(72) Inventor: Miller, John Joseph
deceased (US)

(74) Representative: Aalbers, Onno et al
P.O. Box 302
NL-2501 CH The Hague (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 186 235 B1

## Description

The presence of significant quantities of $H_2S$ and $CO_2$ in various "sour" industrial gaseous streams poses a persistent problem. Although various procedures have been developed to remove and recover these contaminants, most such processes are deficient, for a variety of reasons.

In one cyclic method currently attracting attention, the sour gas is contacted, preferably with a reactant or solvent-reactant system which comprises a regenerable reactant, to produce solid free sulphur which is recovered either prior or subsequent to regeneration. Suitable reactant materials include polyvalent metallic ions, such as iron, vanadium, copper, manganese, and nickel, and include polyvalent metal chelates. Preferred reactants are coordination complexes in which the polyvalent metals form chelates with specified organic acids.

In yet another process $CO_2$ present in the gaseous stream is also removed by the use of a suitable selective absorbent.

Other processes involve removal of impurities from aqueous streams utilizing various polyvalent metal chelates.

Because these "cleanup" processes generally represent significant costs to manufacturing operations, any improvements in such processes which increase their efficiency may have great economic importance. For example, where chelates of polyvalent metals are employed, degradation or decomposition of the chelate over a period of time represents an important cost in the process, as well as requiring measures for decomposition product bleed, removal or treatment and addition of fresh solution, and attention should be paid to preventing build-up of decomposition products and consequent loss of efficiency.

USA patent specification No. 4 091 073 discloses a process for the removal of $H_2S$ from a sour gaseous stream employing an aqueous reactant solution containing degradable iron chelates comprising

a) contacting in a contacting zone the sour gaseous stream with an aqueous reactant solution at a temperature below the melting point of sulphur, the reactant solution comprising an effective amount of Fe(III) chelate of an organic acid under conditions to convert $H_2S$, producing a sweet gaseous stream, and solid sulphur and Fe(II) chelate of said acid in an aqueous mixture;

b) removing sulphur from the aqueous mixture, producing an aqueous mixture having reduced sulphur content;

c) passing the aqueous mixture with oxygen through a regeneration zone to oxidize the Fe(II) chelate of the organic acid in the aqueous mixture producing Fe(III) chelate of said acid in a regenerated aqueous reactant solution; and

d) passing regenerated aqueous reactant solution from step (c) to the contacting zone for use as reactant solution therein.

Evidence exists that maintenance of a relatively high Fe(II) chelate concentration, and optionally thiosulphate concentration, during regeneration, limits degradation of the ligand. It is an object of the present invention to provide a process in which a relatively high concentration of Fe(II) ligand during the regeneration is maintained.

To this end of the process for removal of $H_2S$ from a sour gaseous stream is characterized in that during regeneration in step c) degradation of the degradable iron chelates in the aqueous mixture is inhibited, and in that the aqueous mixture and oxygen are passed in plug flow through the regeneration zone to maintain a presence of Fe(II) chelate throughout the mixture during at least the greater portion of the passage of the flow through the regeneration zone.

The oxygen converts Fe(II) chelate or chelates to the Fe(III) chelate or chelates, and regenerated reactant solution is passed to the contacting zone for use as the reactant solution therein.

As used herein, the terms "plug flow" or "substantially plug flow" refer to the fact that a given portion of the mixture flows through the reactor without overtaking or significantly overtaking any other portion of the mixture, and the residence time in the regenerator for a given portion of mixture is the same or substantially the same as any other portion. The oxygen may travel at the same rate as the mixture or at slightly higher or lower rates. The effect of utilization of this technique is to provide contact for the oxygen and the mixture for regeneration purposes, but allowing Fe(II) chelate to be present in significant concentration throughout the mixture during or over all or at least the greater portion of the regeneration procedure.

If regeneration is not total the Fe(II) chelate is present at all times to inhibit degradation of the ligand.

Sulphur may be removed from the system after the regeneration of the mixture, although this is not preferred, or as described in by EP—A—0066310 G. Blytas and Z. Diaz.

As used herein, the term "oxygen" includes oxygen-containing gases, such as air or air enriched with oxygen.

In another embodiment of the invention, sour gaseous stream containing $H_2S$ and $CO_2$ is contacted with a selective absorbent-aqueous reactant mixture at a temperature below the melting point of sulphur, the reactant mixture and procedure being similar to that described, supra. Broadly, this is accomplished by the use of an absorbent mixture containing a lean selective absorbent for $CO_2$ (and preferably for $H_2S$, as well), and an effective amount of Fe(III) chelate of the specified organic acid or acids, as described. A purified or "sweet" gaseous stream is produced which meets general industrial and commercial $H_2S$ and $CO_2$ specifications. The $CO_2$ is absorbed, and the $H_2S$ is immediately converted to sulphur by the Fe(III) chelate. In the process, the reactant is reduced, and the sulphur may be

removed prior to regeneration of the mixture, or thereafter, as described, supra.

The invention also provides, in this embodiment, for the regeneration of the reactant and the absorbent. Specifically, the loaded absorbent mixture containing Fe(II) chelate of said organic acid or acids is passed with oxygen in plug flow or substantial plug flow through a regeneration zone, and the mixture is thereby regenerated to produce a selective absorbent-aqueous reactant mixture having an increased ratio of Fe(III) chelate of said organic acid or acids to Fe(II) chelate of said acid of acids. The regeneration mixture is then passed to the contacting zone. If significant quantities of $CO_2$ have been absorbed, the reactant-containing solution is preferably treated, such as by heating or pressure reduction, to remove the bulk of the $CO_2$ before regeneration of the reactant, (either prior or subsequent to sulphur removal). Alternately, or if small quantities of $CO_2$ are absorbed, the $CO_2$ may simply be stripped in the regeneration zone.

As indicated, the regeneration of the reactant is accomplished by the utilization of oxygen, preferably as air. The oxygen will accomplish two functions, the oxidation of Fe(II) of the reactant to Fe(III), and the stripping of any residual $CO_2$ (if originally present) from the absorbent mixture. The oxygen (in whatever form supplied) is supplied in a stoichiometric equivalent or excess with respect to the amount of Fe(II) chelate present in the mixture. Preferably, the oxygen is supplied in an amount from about 20 per cent to about 300 per cent excess.

In a suitable embodiment of the invention the aqueous reactant solution used in step (a) further comprises an amount of Fe(II) chelate of the organic acid. The molar ratio of Fe(II) chelate of the organic acid to Fe(III) chelate can be less than about 0.3. In a further suitable embodiment the molar ratio is in the range of from 0.01 to 0.25.

The reactant materials employed are coordination complexes in which iron forms chelates with an acid having the formula

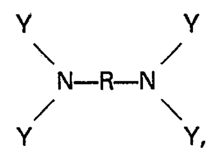, wherein

— from two to four of the groups Y are selected from acetic and propionic acid groups;

— from zero to two of the groups Y are selected from 2-hydroxyethyl, 2-hydroxypropyl, and

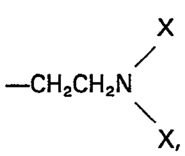,

wherein X is selected from acetic and propionic acid groups; and

R is ethylene, propylene or isopropylene or alternatively cyclohexane or benzene where the two hydrogen atoms replaced by nitrogen are in the 1,2 position, and mixtures thereof.

The iron chelates are readily formed in aqueous solution by reaction of an appropriate salt, oxide or hydroxide of iron and the chelating agent in the acid form, or an alkali metal or ammonium salt thereof. Exemplary chelating agents include amino acetic acids derived from ethylenediamine, diethylenetriamine, 1,2-propylenediamine, and 1,3-propylenediamine, such as EDTA (ethylenediamine tetraacetic acid), HEDTA (N-(2-hydroxyethyl)ethylenetriacetic acid), DETPA (diethylenetriamine pentaacetic acid), amino acetic acid derivatives of cyclic 1,2-diamines, such as 1,2-diamino cyclohexane-N,N-tetraacetic acid, and 1,2-phenylene-diamine-N,N-tetraacetic acid, and the amides of polyamino acetic acids disclosed in Bersworth US patent No. 3,580,950. The Fe(III) chelate of N-(2-hydroxyethyl)ethylenediamine triacetic acid is a suitable reactant.

In a further suitable embodiment of the invention the organic acid used is nitrilotriacetic acid.

The particular type of sour gaseous stream treated is not critical, as will be evident to those skilled in the art. Streams particularly suited to removal of $H_2S$ and $CO_2$ by the practice of the invention are, as indicated, naturally-occuring gases, synthesis gases, process gases, and fuel gases produced by gasification procedures, e.g., gases produced by the gasification of coal, petroleum, shale, tar sands, etc. Particularly preferred are coal gasification streams, natural gas streams, and refinery feedstocks composed of gaseous hydrocarbon streams, especially those streams of this type having a low ratio of $H_2S$ to $CO_2$, and other gaseous hydrocarbon streams. The term "hydrocarbon stream(s)", as employed herein, is intended to include streams containing significant quantities of hydrocarbon (both paraffinic and aromatic), it being recognized that such streams contain significant "impurities" not technically defined as a hydrocarbon. Again, streams containing principally a single hydrocarbon, e.g., ethane, are eminently suited to the practice of the invention. Streams derived from the gasification and/or partial oxidation of gaseous or liquid hydrocarbon may be treated by the invention. The $H_2S$ content of the type of streams contemplated will vary extensively, but, in general, will range from about 0.1 per cent to about 10 per cent by volume. $CO_2$ content will also vary, and may range from about 0.5 per cent to about 99.0 per cent (or more) by volume. In this context, the invention may be used to remove $H_2S$ from various $CO_2$ steams, e.g., supercritical $CO_2$ streams. Obviously, the amounts of $H_2S$ and $CO_2$ present are not generally a limiting factor in the practice of the invention.

The temperatures employed in the contacting or absorption-contact zone are not generally critical, except that the reaction is carried out below the melting point of sulphur, and, if an absorbent is used, the temperatures employed must permit acceptable absorption of $CO_2$. In many commer-

cial applications, such as the removal of $H_2S$ and $CO_2$ from natural gas to meet pipeline specifications, absorption at ambient temperatures is desired, since the cost of refrigeration would exceed the benefits obtained due to increased absorption at the lower temperature. In general, temperatures from 10°C to 80°C are suitable, and temperatures from 20°C to 45°C are preferred. Contact times will range from about 1 second to about 120 seconds, with contact times of 2 seconds to 60 seconds being preferred.

Similarly, in the regeneration of stripping zone or zones, temperatures may be varied widely. Preferably, the regeneration zone should be maintained at substantially the same temperature as the contacting zone. If heat is added to assist regeneration, cooling of the aqueous mixture is required before return of the mixture to the contacting zone. In general, temperatures of from about 10°C to 80°C, preferably 20°C to 40°C may be employed.

Pressure conditions in the contacting zone may vary widely, depending on the pressure of the gas to be treated. For example, pressures in the contacting zone may vary from 0.1 MPa up to 15 or even 20 MPa. Pressures of from 0.1 MPa to about 10 MPa are preferred. In the regeneration zone, pressures and fluid flow will be regulated to achieve plug flow or substantial plug flow of the oxygen and the mixture. Thus, residence times for given volumes of mixture and oxygen will range from 3,600 s to 600 s, preferably from 2,400 s to 1,200 s. The pressure, fluid flow, and temperature relationships involved are well understood by those skilled in the art, and need not be detailed herein. Other conditions of operation for this type of reaction process, e.g., pH, etc, are further described in US Patent No. 3,068,065 to Hartley, et al, dated December 11, 1962, and US Patent No. 4,009, 251, to Meuly, issued February 22, 1977, incorporated herein by reference. Preferably, pH in the process of the invention will range from about 6 to about 7.5, and the molar ratio of the acid to the iron is from about 1.2 to 1.4. The process is suitably conducted continuously.

As indicated, the $H_2S$, when contacted, is rapidly converted in the process of the invention by the Fe(III) chelate of the reactant solution to solid elemental sulphur. Since the iron chelates have limited solubility in many solvents, the iron chelate compound or compounds are preferably supplied in mixture with the liquid absorbent and water. The amount of Fe(III) chelate supplied or employed is an effective amount, i.e., an amount sufficient to convert all or substantially all of the $H_2S$ in the gas stream, and will generally be of the order of at least about two mol per mol of $H_2S$. Ratios of from about 2 mol to about 15 mol of Fe(III) chelate of the specified acid or acids per mole of $H_2S$ may be used, with ratios from about 2 mol per mol to about 5 mol of Fe(III) chelate per mol of $H_2S$ being preferred. If Fe(II) chelate is present, the molar ratio of Fe(II) chelate to Fe(III) chelate can be less than about 0.3, and will suitable range from about 0.01 to about 0.25.

The manner of preparing the mixture containing an absorbent is a matter of choice. For example, the chelate may be added to the absorbent, and, if necessary, then water added. The amount of water added will normally be just that amount necessary to achieve solution of the iron chelate, and can be determined by routine experimentation. Since the iron chelate may have a significant solubility in the solvent, and since water is produced by the reaction of the $H_2S$ and the Fe(III) ions of the chelate, precise amounts of water to be added cannot be given. In the case of absorbents having a low solubility for the iron chelate, approximately 5 per cent to 10 per cent water by volume, based on the total volume of the absorbent mixture, will generally provide solvency. Preferably, however, the Fe(III) chelate is added as an aqueous solution to the liquid absorbent. Where the chelate is supplied as an aqueous solution, the amount of solution supplied may be about 20 per cent to about 80 per cent by volume of the total absorbent mixture supplied to the absorption zone. The chelate solution will generally be supplied as an aqueous solution having a concentration of from about 0.1 mol/l to about 3 mol/l, and a concentration of about 1 mol/l is preferred.

The absorbents employed in this invention are those absorbents which have a high degree of selectivity in absorbing $CO_2$ (and preferably $H_2S$ as well) from the gaseous streams. Any of the known absorbents conventionally used which do not affect the activity of the Fe(III) chelate, and which exhibit sufficient solubility for the reactant or reactants may be employed. As indicated, the absorbent preferably has good absorbency for $H_2S$ as well, in order to assist in the removal of any $H_2S$ present in the gaseous streams. The particular absorbent chosen is a matter of choice, given these qualifications, and selection can be made by routine experimentation. For example, diethylene glycol monoethyl-ether, propylene carbonate, tetraethylene glycol-dimethyl ether, N-methyl pyrrolidone, sulfolane, methyl isobutyl ketone, 2,4-pentanedione, 2,5-hexanedione, diacetone alcohol, hexyl acetate, cyclohexanone, mesityl oxide, and 4-methyl-4-methoxy-pentone-2 may be used. Suitable temperature and pressure relationships for different $CO_2$-selective absorbents are known, or can be calculated by those skilled in the art.

The manner for recovering the sulphur is a mater of choice. For example, the sulphur may be recovered by settling, filtration, liquid flotation, or by suitable devices, such as a hydrocyclone.

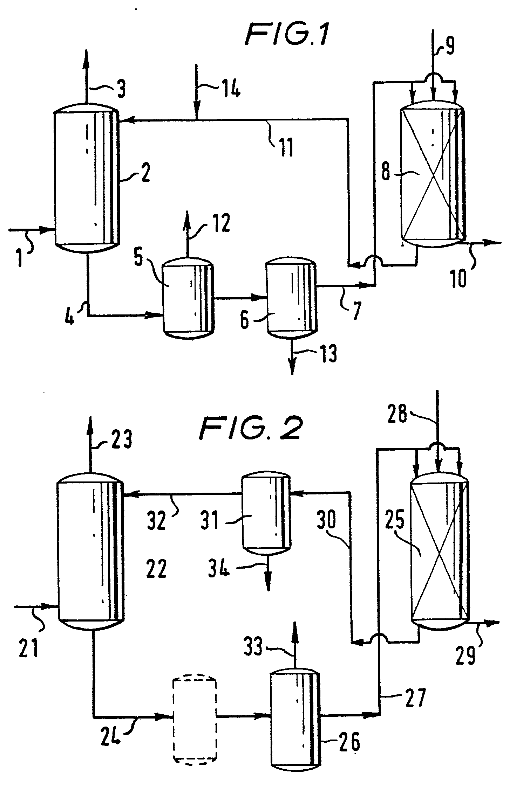

The invention will now be described by way of example in more detail with reference to the accompanying schematic drawing, wherein Figure 1 illustrates the first embodiment of the invention, and Figure 2 illustrates the practice of the invention where a selective solvent for $CO_2$ is employed. All values are calculated or merely exemplary.

As shown, sour gas, e.g., natural gas containing about 0.5 per cent by volume $H_2S$, in line 1 enters contactor or column 2 (tray type) into which also

enters an aqueous mixture comprising an aqueous 0.8 mol/l solution of the Fe(III) chelate of N-(2-hydroxyethyl)ethylenediamine triacetic acid, the mixture also containing 0.2 mol/l of the Fe(II) chelate of N-(2-hydroxyethyl)ethylenediamine triacetic acid. The pressure of the feed gas is about 84 MPa (gauge), and the temperature of the aqueous mixture is about 45°C. A contact time of about 120 s is employed in order to react all the $H_2S$. Purified or "sweet" gas leaves column 2 through line 3. The "sweet" gas is of a purity sufficient to meet standard requirements. In the mixture, the $H_2S$ is converted to elemental sulphur by the Fe(III) chelate, Fe(III) chelate in the process being converted to the Fe(II) chelate. The aqueous mixture produced, including the elemental sulphur, is removed continuously and sent through line 4 to a depressurization and degassing unit 5, wherein gas freed is removed through line 12, and then to a sulphur removal zone 6. Sulphur removal zone 6 may comprise a filtration unit, or may be an extraction system as described in US Patent No. 4,414,194 to Blytas. The sulphur is removed through line 13.

Whichever is employed, the aqueous mixture is removed via line 7 for regeneration of the Fe(II) chelate. In regeneration zone or column 8, the mixture is contacted with excess air in line 9 to convert the Fe(II) chelate to the Fe(III) chelate.

Regeneration zone 8 comprises a packed bed regenerator with cocurrent downflow of oxygen (as air) and aqueous mixture. The aqueous mixture is passed down the bed at a rate of $5 \times 10^{-3}$m/s, and the rate of oxygen flow (as air) is about $2.5 \times 10^{-5}m^3/s$. The temperature in the column is about 45°C, and overall pressure is about 0.2 MPa. Spent air is removed via line 10, and regenerated mixture, having a molar ratio of Fe(III) chelate of N-(2-hydroxyethyl)ethylenediamine triacetic acid to Fe(II) chelate of N-(2-hydroxyethyl)ethylenediamine triacetic acid of 4, is returned via line 11 to column 2. If required additional aqueous mixture can be supplied through line 14.

The drawing in Figure 1 illustrates the aspect of the invention wherein the extraction is carried out prior to regeneration. Removal of the sulphur after regeneration may be accomplished by positioning of the removal unit "after" the regeneration zone. Thus, regenerated liquid, still containing sulphur, may be passed via line 11 to units analogous or equivalent to unit 6, sulphur recovered, and regenerated sulphur-free solution returned to contactor 2.

Instead of using Fe(III) chelate of N-(2-hydroxyethyl)ethylenediamine triacetic acid, natural gas containing 0.5 per cent by volume $H_2S$ can be contacted in column 2 with an aqueous mixture comprising 0.8 mol/l of Fe(III) chelate of nitrilotriacetic acid also containing 0.2 mol/l Fe(II) chelate of nitrilotriacetic acid. The pressure of the feed gas is about 84 MPa (gauge) and the temperature of the aqueous mixture is about 45°C. The contact time is 120 s, so that all $H_2S$ is converted to solid sulphur. A sweet gaseous stream is removed through line 3, and an aqueous mixture including elemental sulphur and Fe(II) chelate of nitrilotriacetic acid is passed through line 4 to a depressurization and degassing unit 5 and then to a sulphur removal zone.

In the regeneration zone 8 the aqueous mixture is contacted with excess air in line 9 to convert Fe(II) chelate to Fe(III) chelate. Regeneration zone 8 comprises a packed bed regenerator with cocurrent downflow of oxygen (as air) and aqueous mixture. The rate of aqueous mixture is $5 \times 10^{-3}$m/s and the rate of oxygen flow is about $2.5 \times 10^{-5}m^3/s$, the temperature in the column is about 45°C and the overall pressure is about 0.2 MPa. Spent air is removed via line 10, and regenerated mixture, having a molar ratio of Fe(III) chelate of nitrilotriacetic acid to Fe(II) chelate of nitrilotriacetic acid of about 4, is returned via line 11 to column 2.

In Figure 2, sour gas e.g., natural gas containing about 0.5 per cent by volume $H_2S$, and 32 per cent by volume $CO_2$, in line 21 enters absorption column 22 (tray type) into which also enters an absorbent mixture composed of 90 per cent (by volume) diethylene glycol monoethyl ether and 10 per cent by volume of an aqueous 0.8 mol/l solution of the Fe(III) chelate of N-(2-hydroxyethyl) ethylenediamine triacetic acid, also containing 0.2 mol/l of the Fe(II) chelate of N-(2-hydroxyethyl)ethylenediamine triacetic acid. The pressure of the feed gas is about 84 MPa (gauge), and the temperature of the absorbent mixture is about 45°C. A contact time of about 45 s is employed in order to absorb virtually all $CO_2$ and to react all the $H_2S$. Purified or "sweet" gas leaves absorption column 22 through line 23. The "sweet" gas is of a purity sufficient to meet standard requirements. In the absorbent mixture, the $H_2S$ is converted to elemental sulphur by Fe(III) chelate, Fe(III) chelate in the process being converted to the Fe(II) chelate. The absorbent mixture, containing elemental sulphur, absorbed $CO_2$, and about 0.6 mol/l Fe(II) chelate, is removed continuously and sent rhough line 24 to regeneration. Prior to entry in zone or column 25, the sulphur in the absorbent mixture may be removed in a sulphur separation zone (shown in dotted lines). However, sulphur recovery may also be accomplished at a later stage, as shown hereinafter. As shown, the $CO_2$ absorbed is removed in unit 26 by reduction of pressure. The freed $CO_2$ leaves unit 26 via line 33 and the lean mixture is forwarded via line 27 to column 25. Heat may be added, if necessary. Any absorbent carried over with vented $CO_2$ may be recovered by conventional equipment, such as a carbon absorption bed (not shown), and recycled.

In regeneration zone 25, the now lean absorbent mixture is treated in a similar fashion to that described with reference to Figure 1. Fe(II) chelate of N-(2-hydroxyethyl)ethylenediamine triacetic acid is converted by oxygen supplied through line 28 to Fe(III) chelate, while maintaining sufficient Fe(II) chelate of N-(2-hydroxyethyl)ethylenediamine triacetic acid to inhibit degradation of the

iron chelates. The temperature of the column 25 is about 45°C, and pressure in the column is maintained at about 0.2 MPa. Spent air is removed from column 25 through line 29, while regenerated absorbent mixture, which still contains elemental sulphur, is sent through line 30 to sulphur removal zone 31. In unit 31, which may be a settler, the sulphur is removed from the absorbent mixture and recovered via line 34. The now regenerated absorbent mixture is returned via line 32 to absorption zone 22.

In an alternative embodiment of the invention natural gas containing about 0.5 per cent by volume $H_2S$ and 32 per cent by volume $CO_2$ is contacted in column 22 with an absorbent mixture including 90 per cent by volume diethylene glycol monoethyl ether and 10 per cent by volume of an aqueous 0.8 mol/l solution of Fe(III) chelate of nitrilotriacetic acid also containing 0.2 mol/l of Fe(II) chelate of nitrilotriacetic acid. The pressure of the feed gas is about 84 MPa (gauge), the temperature of the absorbent mixture is about 45°C, and a contact time of 45 s is employed in order to absorb virtually all $CO_2$ and to react all $H_2S$. Sweet gas leaves the column 22 through line 23 and an aqueous mixture including elemental sulphur, absorbed $CO_2$ and about 0.6 mol/l Fe(II) chelate, is removed continuously and sent through line 24 to regeneration.

Prior to entry in zone or column 25, the sulphur in the absorbent mixture may be removed in a sulphur separation zone (shown in dotted lines). However, sulphur recovery may also be accomplished at a later stage, as shown hereinafter. As shown, the $CO_2$ absorbed is removed in unit 26 by reduction of pressure, and the lean admixture forwarded via line 27 to column 25. Heat may be added, if necessary. Any absorbent carried over with vented $CO_2$ may be recovered by conventional equipment, such as a carbon absorption bed (not shown), and recycled.

In regeneration zone 25, the now lean absorbent mixture is treated in a similar fashion to that described with reference to Figure 1. Fe(II) chelate of nitrilotriacetic acid is converted by oxygen supplied through line 28 to the Fe(III) chelate, while maintaining sufficient Fe(II) chelate of nitrilotriacetic acid to inhibit degradation of the iron chelates. The temperature of the column 25 is about 45°C, and pressure in the column is maintained at about 0.2 MPa. Spent air is removed from column 25 through line 29, while regenerated absorbent mixture, which still contains elemental sulphur, is sent through line 30 to sulphur removal zone 31. In unit 31, which may be a settler, the sulphur is removed from the absorbent mixture and recovered. The now regenerated absorbent mixture is returned via line 32 to absorption zone 22.

While the invention has been illustrated with particular apparatus, those skilled in the art will appreciate that, except where specified, other equivalent or analogous units may be employed. The term "zones", as employed in the specification and claims, includes, where suitable, the use of segmented equipment operated in series, or the division of one unit into multiple units because of size constraints, etc. For example, an absorption column may comprise two separate columns in which the solution from the lower portion of the first column would be introduced into the upper portion of the second column, the gaseous material from the upper portion of the first column being fed into the lower portion of the second column. Parallel operation of units, is of course well within the scope of the invention.

Again, as will be understood by those skilled in the art, the solutions or mixtures employed may contain other materials or additives for given purposes. For example, US Patent No. 3,933,993 discloses the use of buffering agents, such as phosphate and carbonate buffers. Similarly, US Patent No. 4,009,251 describes various additives, such as sodium oxylate, sodium formate, sodium thiosulphate, and sodium acetate, which are beneficial.

**Claims**

1. Process for the removal of $H_2S$ from a sour gaseous stream employing an aqueous reactant solution containing degradable iron chelates comprising

a) contacting in a contacting zone the sour gaseous stream with an aqueous reactant solution at a temperature below the melting point of sulphur, the reactant solution comprising an effective amount of Fe(III) chelate of an organic acid under conditions to convert $H_2S$, producing a sweet gaseous stream, and solid sulphur and Fe(II) chelate of said acid in an aqueous mixture;

b) removing sulphur from the aqueous mixture, producing an aqueous mixture having reduced sulphur content;

c) passing the aqueous mixture with oxygen through a regeneration zone to oxidize the Fe(II) chelate of the organic acid in the aqueous mixture producing Fe(III) chelate of said acid in a regenerated aqueous reactant solution; and

d) passing regenerated aqueous reactant solution from step (c) to the contacting zone for use as reactant solution therein, characterized in that during regeneration in step c) degradation of the degradable iron chelates in the aqueous mixture is inhibited, and in that the aqueous mixture and oxygen are passed in plug flow through the regeneration zone to maintain a presence of Fe(II) chelate throughout the mixture during at least the greater portion of the passage of the flow through the regeneration zone.

2. Process as claimed in claim 1, wherein the stream from which the $H_2S$ is removed is selected from naturally-occuring gases, synthesis gases, process gases, and fuel gases.

3. Process as claimed in claim 2, wherein the sour gaseous stream is natural gas or a stream derived from the gasification of coal or a liquid hydrocarbon.

4. Process as claimed in claim 1, wherein heat is supplied in step (c) to assist in regeneration.

5. Process as claimed in any one of the claims 1-4, wherein the aqueous reactant solution used further comprises a lean selective absorbent, and wherein, before or after sulphur is removed from the aqueous mixture obtained in step (a), $CO_2$ is removed from the aqueous mixture.

6. Process as claimed in any one of the claims 1-5, wherein the aqueous reactant solution used in step (a) further comprises an amount of Fe(II) chelate of the organic acid.

7. Process as claimed in claim 6, wherein the molar ratio of Fe(II) chelate of the organic acid to Fe(III) chelate of the organic acid is less than about 0.3.

8. Process as claimed in claim 7, wherein the molar ratio of Fe(II) chelate of the organic acid to Fe(III) chelate of the organic acid is in the range of from 0.01 to 0.25.

9. Process as claimed in any one of the claims 1-8, wherein the organic acid used has the formula

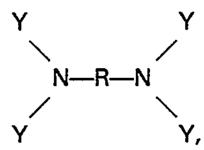, wherein

— from two to four of the groups Y are selected from acetic and propionic acid groups;

— from zero to two of the groups Y are selected from 2-hydroxyethyl, 2-hydroxypropyl, and

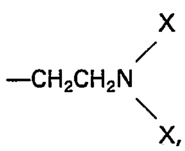,

wherein X is selected from acetic acid pripionic acid groups; and

— R is ethylene, propylene or isopropylene or alternatively cyclohexane or benzene where the two hydrogen atoms replaced by nitrogen are in the 1,2-position, or wherein the organic acid comprises mixtures thereof.

10. Process as claimed in any one of the claims 1-8, wherein the organic acid used is N-(2-hydroxyethyl)ethylenediamine triacetic acid.

11. Process as claimed in any one of the claims 1-8, wherein the organic acid used is nitrilotriacetic acid.

**Patentansprüche**

1. Verfahren zur Entfernung von $H_2S$ aus einem sauren Gasstrom unter Verwendung einer wäßrigen Reagenzlösung enthaltend abbaubare Eisenchelate, welches Verfahren die folgenden Schritte umfaßt:

a) Kontaktieren des sauren Gasstromes in einer Kontaktierzone mit einer wäßrigen Reagenzlösung bei einer Temperatur unterhalb des Schmelzpunktes von Schwefel, wobei die Reagenzlösung eine wirksame Menge eines Eisen(III)-chelats einer organischen Säure enthält, unter für die Umwandlung von $H_2S$ geeigneten Bedingungen, Herstellen eines süßen Gasstromes und von festem Schwefel und Eisen(II)chelat der genannten Säure in einer wäßrigen Mischung;

b) Entfernen des Schwefels aus der wäßrigen Mischung, Herstellen einer wäßrigen Mischung mit verringertemSchwefelgehalt;

c) Durchleiten der wäßrigen Mischung zusammen mit Sauerstoff durch eine Regenerierungszone zwecks Oxidation des Eisen(II)chelats der organischen Säure in der wäßrigen Mischung, Herstellen von Eisen(III)chelat der genannten Säure in einer regenerierten wäßrigen Reagenzlösung; und

d) Weiterleiten der regenerierten wäßrigen Reagenzlösung aus Stufe (c) zur Kontaktierzone wo sie als Reagenzlösung verwendet wird, dadurch gekennzeichnet, daß während der Regenerierung in Stufe c) der Abbau der abbaubaren Eisenchelate in der wäßrigen Mischung verhindert wird, und daß die wäßrige Mischung und Sauerstoff in Pfropfenströmung durch die Regenerationszone geleitet werden, so daß das Vorhandensein von Eisen(II)chelat innerhalb der ganzen Mischung während zumindest des größeren Teils des Durchleitens des Stromes durch die Regenerationszone gewährleistet wird.

2. Verfahren wie in Anspruch 1 beansprucht, in welchem der Strom, aus welchem das $H_2S$ entfernt wird, ausgewählt ist aus natürlich vorkommenden Gasen, Synchesegasen, Verfahrensgasen und Brennstoffgasen.

3. Verfahren wie in Anspruch 2 beansprucht, in welchem der sauere Gasstrom Erdgas oder ein bei der Vergasung von Kohle oder einem flüssigen Kohlenwasserstoff entstehender Strom ist.

4. Verfahren wie in Anspruch 1 beansprucht, in welchem in Stufe (c) Wärme zugeführt wird, um die Regeneration zu fördern.

5. Verfahren wie in einem der Ansprüche 1 bis 4 beansprucht, in welchem die eingesetzte wäßrige Reagenzlösung weiterhin ein nicht beladnes selektives Absorptionsmittel enthält und in welchem, vor oder nach der Entfernung des Schwefels aus der in Stufe (a) erhaltenen wäßrigen Mischung, $CO_2$ aus der wäßrigen Mischung entfernt wird.

6. Verfahren wie in einem der Ansprüche 1 bis 5 beansprucht, in welchem die in Stufe (a) eingesetzte wäßrige Reagenzlösung weiterhin einen Mengenanteil an Eisen(II)chelat der organischen Säure enthält.

7. Verfahren wie in Anspruch 6 beansprucht, in welchem das molare Verhältnis von Eisen(II)chelat der organischen Säure zu Eisen(III)chelat der organischen Säure unter 0,3:1 liegt.

8. Verfahren wie in Anspruch 7 beansprucht, in welchem das molare Verhältnis von Eisen(II)chelat der organischen Säure zu Eisen(III)chelat der organischen Säure im Bereich von 0,01:1 bis 0,25:1 liegt.

9. Verfahren wie in einem der Ansprüche 1 bis 8 beansprucht, in welchem die verwendete organische Säure die Formel

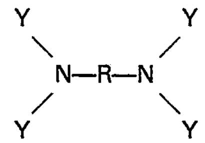

hat, in welcher

2 bis 4 der Gruppen Y ausgewählt sind aus Essigsäure- und Propionsäuregruppen;

0 bis 2 der Gruppen Y ausgewählt sind aus 2-Hydroxyäthyl, 2-Hydroxypropyl, und

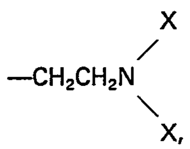

wobei X ausgewählt ist aus Essigsäure- und Propionsäuregruppen; und

R Äthylen, Propylen oder Isopropylen oder wahlweise Cyclohexan oder Benzol ist, wobei die beiden Wasserstoffatome in der 1,2-Stellung durch Stickstoff ersetzt sind, oder in welchem die organische Säure Mischungen davon enthält.

10. Verfahren wie in einem der Ansprüche 1 bis 8 beansprucht, in welchem die verwendete organische Säure N-(2-Hydroxyäthyl)äthylendiamintriessigsäure ist.

11. Verfahren wie in einem der Ansprüche 1 bis 8 beansprucht, in welchem die verwendete organische Säure Nitrilotriessigsäure ist.

## Revendications

1. Procédé pour éliminer $H_2S$ d'un courant gazeux acide employant une solution de réactif aqueuse contenant des chélates de fer dégradables, procédé comprenant les étapes qui consistent

a) à mettre en contact, dans une zone de contact, le courant gazeux acide avec une solution de réactif aqueuse, à une température inférieure au point de fusion du soufre, la solution de réactif comprenant une quantité efficace de chélate de Fe(III) d'une acide organique, dans des conditions propres à transformer $H_2S$, en produisant un courant gazeux non corrosif, et du soufre solide et un chélate de Fe(II) dudit acide en mélange aqueux;

b) à éliminer le soufre du mélange aqueux, en produisant un mélange aqueux ayant une teneur en soufre réduite;

c) à faire passer le mélange aqueux avec de l'oxygène à travers une zone de régénération pour oxyder le chélate de Fe(II) de l'acide organique dans le mélange réactionnel en produisant un chélate de Fe(III) dudit acide dans une solution de réactif aqueuse régénérée; et

d) à faire passer la solution de réactif aqueuse régénérée obtenue dans l'étape c) vers la zone de contact pour l'y utiliser comme solution de réactif, caractérisé en ce que, pendant la régénération dans l'étape

c), la dégradation des chélates de fer dégradables dans le mélange aqueux est inhibée, et en ce que le mélange aqueux et l'oxygène sont envoyés en écoulement avec effet bouchon à travers la zone de régénération pour maintenir la présence de chélate de Fe(II) dans tout le mélange pendant au moins la plus grande partie du passage de l'écoulement à travers la zone de régénération.

2. Procédé selon la revendication 1, dans lequel le courant d'où est éliminé le $H_2S$ est choisi parmi les gaz naturels, les gaz de synthèse, les gaz de production et les gaz carburants.

3. Procédé selon la revendication 2, dans lequel le courant gazeux acide est du gaz naturel ou un courant dérivé de la gazéification du charbon ou d'un hydrocarbure liquide.

4. Procédé selon la revendication 1, dans lequel de la chaleur est fournie dans l'étape (c) pour aider la régénération.

5. Procédé selon l'une quelconque des revendications 1 à 4, dans lequel la solution de réactif aqueuse utilisée comprend en outre un absorbant appauvri sélectif et dans lequel, avant ou après l'elimination du soufre du mélange aqueux obtenu dans l'étape (a), le $CO_2$ est éliminé du mélange aqueux.

6. Procédé selon l'une quelconque des revendications 1 à 5, dans lequel la solution de réactif aqueuse utilisée dans l'étape (a) comprend en outre une quantité de chélate de Fe(II) de l'acide organique.

7. Procédé selon la revendication 6, dans lequel le rapport molaire du chélate de Fe(II) de l'acide organique au chélate de Fe(III) de l'acide organique est inférieure à 0,3.

8. Procédé selon la revendication 7, dans lequel le rapport molaire du chélate de Fe(II) de l'acide organique au chélate de Fe(III) de l'acide organique est dans l'intervalle de 0,01 à 0,25.

9. Procédé selon l'une quelconque des revendications 1 à 8, dans lequel l'acide organique utilisé a pour formule

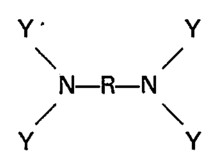

dans laquelle

— de 2 à 4 des groupes Y sont choisis parmi les groupes acide acétique et acide propionique;

— de 0 à 2 des groupes Y sont choisis parmi les groupes 2-hydroxyéthyle, 2-hydroxypropyle, et

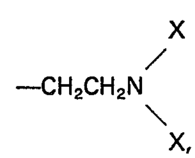

dans laquelle X est choisi parmi les groupes acide acétique et acide propionique; et

— R est un radical éthylène, propylène ou isopropylène, ou en variante cyclohexane ou benzène, dans lequel les deux atomes d'hydrogènes remplacés par un azote sont en position 1,2, et leurs mélanges.

10. Procédé selon l'une quelconque des revendications 1 à 8, dans lequel l'acide organique utilisé est l'acide N-(2-hydroxyéthyl)éthylène-diamine-triacétique.

11. Procédé selon l'une quelconque des revendications 1 à 8, dans lequel l'acide organique utilisé est l'acide nitrilotriacétique.

FIG.1

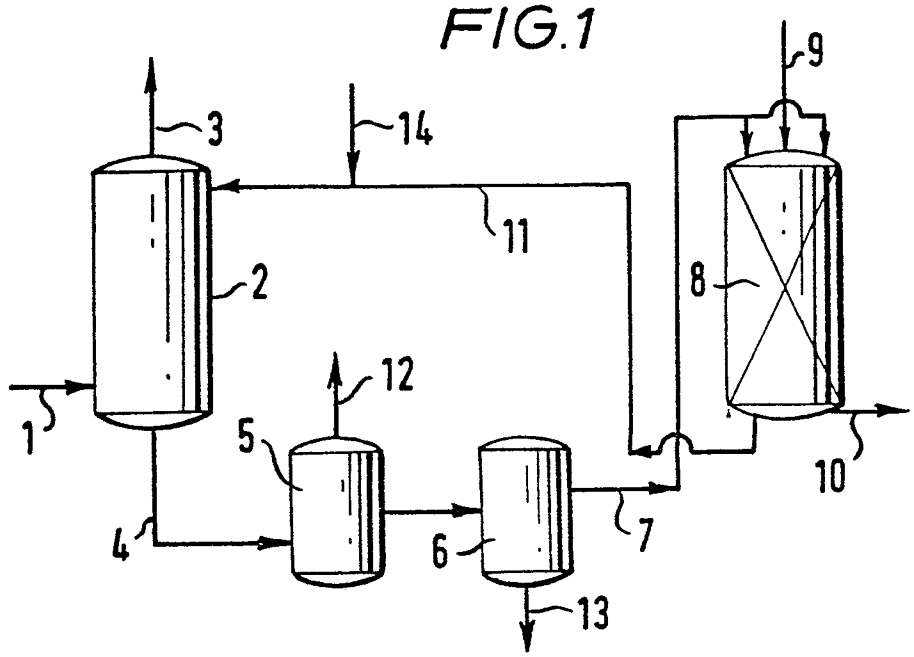


FIG. 2